# DEMANDE DE BREVET EUROPEEN

(11) **EP 1 057 404 A1**
(43) Date de publication de la demande: **06.12.2000**
(21) Numéro de dépôt: 99810554.8
(22) Date de dépôt: 23.06.1999
(51) Int. Cl.: A01K 51/00

(54) **Procédé pour combler les carences pendant la période de croissance de l'abeille**

(30) Priorité: 28.04.1999 CH 78199
(71) Demandeur: Saez, Alberto, 1211 Genève-13 (CH)
(72) Inventeur: Saez, Alberto, 1211 Genève-13 (CH); Fuentes, Victor, 5400 San Juan (AR); Saez, Silvio, 5400 San Juan (AR)
(74) Mandataire: Moinas, Michel

(57) **Abrégé**

Le procédé de l'invention constitue en soi une stratégie de lutte contre la Varroasis visant à renforcer la structure exocuticulaire de l'abeille afin de dissuader le Varroa de passer du faux-bourdon vers l'abeille ouvrière.

L'invention concerne un procédé agrogéologique destiné à pallier à l'inconvénient des déficiences minéralogiques des sols de la flore apicole en utilisant une solution de **diatomées d'eau douce** afin d'améliorer la qualité minéralogique des protéines du pollen consommé en particulier par les larves des abeilles ouvrières à partir de la 6ème heure après leur naissance.

## Description

Alors que la santé des ruches est devenu un critère, devant les difficultés liées à la résistance parasitaire dans la ruche, et face à la menace d'extinction de l'abeille occidentale par le Varroa, le procédé de l'invention est ancré dans des thèmes pertinents comme:
- Biologie des abeilles (les races, la nutrition, la qualité du pollen et la santé de l'abeille, la colonie, etc.)
- Biologie appliquée (pollinisation, sélection, maladies, parasites, etc.)
- Botanique apicole (les plantes visitées par les abeilles).

Nous avons constaté que les plantes des cultures intensives offrent à l'abeille un pollen pauvre en matières essentielles pour un développement sain des larves. En outre, au détriment de la santé de l'abeille, la productivité est le seul mot d'ordre du labeur quotidien des butineuses dans l'apiculture moderne. Bien que les couvains de *l'Apis Cerana* soient plus adaptés pour la réproduction du Varroa (24), celui-ci prolifère dans les colonies de *l'Apis Mellifera* parce que les cellules des ouvrières sont à côté des celles des faux-bourdons.

L'abeille, à la différence d'autres insectes pollinisateurs, pour s'approvisionner en minéraux, elle dépend exclusivement des ses trouvailles d'origine florale. Or, l'amélioration des espèces agricoles, porte-drapeau de la Révolution Verte, grâce à la création des premières banques génétiques, a triplé la production de graines au détriment de la qualité minéralogique des pollens. Le varroa doit être considéré plutôt comme un symptôme et pas comme une maladie de l'abeille.

Une fois localisée la source de pollen, de retour à la ruche, l'abeille communique aussitôt avec sa dance l'endroit ainsi que la qualité du pollen trouvé. Autrement dit, l'abeille exprime ainsi ses besoins avec le classement du pollen en deux catégories : bon et mauvais. A ce sujet, l'agriculture moderne, avec sa masse florale uniforme et monotone, fait tomber l'abeille dans l'impossibilité de pouvoir trier les pollens.

Nous avons observé les faits suivants:
- Plus long temps l'abeille tourne à l'intérieur de la fleur silvestre à la recherche du nectar, plus elle se frotte au pollen des étamines et, par conséquent, mieux elle préserve la cuticule de son exosquelette vis-à-vis des parasites hôtes. On pourrait, donc en déduire que, mise à part le temps d'operculation des couvains des mâles, cela est une des raisons pour que le Varroa femelle ait une préférence pour les faux-bourdons à la place des ouvrières.
- Au contraire, les fleurs des plantes des cultures intensives offrent à l'abeille butineuse la possibilité de remplir plus rapidement sa corbeille à pollen, ainsi qu'à emmagasiner suffisamment de nectar dans son jabot pour le transporter aussitôt à la ruche, elle reste un minimum de temps dans la fleur. S'est ainsi que l'abeille a gagné le prix d'une butineuse indispensable, mais ce comportement l'a poussé à devenir fragile et très vulnérable. Le procédé de l'invention est, partant, la réponse à la question suivante :
- "pourquoi le Varroa a commencé à déployer rapidement son habitat dans le monde qu'à partir de 1968". La cause est évidente : grâce à sa vulnérabilité, comme suite de la Deuxième Révolution Agricole (mais pas la dernière), l'abeille occidentale est devenue une proie facile pour le Varroa puisqu'il arrive à percer sa faible cuticule toraxique ou abdominale, même si le varroa femelle doit dépenser une grande cantité d'énergie pour y réussir (2 heures de temps), pour y sucer le sang de l'abeille adulte et celui des larves/pupes. Même si *l'Apis meliffera* savait s'épouiller, le Varroa sait s'agripper fermement à son exosquelette pour y percer, avec une grande difficulté, sa cuticule. Le but du procédé de l'invention est, donc :
- satisfaire aux carences de l'abeille pour que ses larves puissent grandir sainement et, surtout, retrouver les protéines cuticulaires que protègent ses glandes exocrines du torax et de l'abdomen de l'abeille d'autrefois. Une abeille bien minéralisée, munie d'un exosquelette résistent aux parasites hôtes, le procédé de l'invention doit acompagner les méthodes de longue haleine de sélection visant à trouver, par le remérage, une souche plus résistante aux parasites.

La reminéralisations des sols est une idée de Julius Hensel de 1880 (Bread from Stones). À l'appui, il faut signaler le rôle des microéléments suivants (pas toujours présents dans les substrats des sols ni dans le plasma des végétaux des cultures intensives) :
- le rôle du Zinc (Zn) dans la membrane du plasma des protéinases (22), ainsi que dans le système immunitaire. Or, de nos jours, l'abeille est une proie facile pour le Varroa, puisqu'il arrive à percer sans difficulté pour s'agripper à sa membrane toraxique et abdominale (devenue si fragile), pour y sucer son hémolymphe.
- le rôle clé du Molybdène (enzyme "xanthine oxidase") dans le processus de la croissance.
- le Sélénium (Se) est essentiel en tant qu'antioxydant pour protéger les cullules des membranes.
- le Manganèse (Mn) est un cofacteur très important des enzymes du métabolisme de la glucose

Le procédé de l'invention intervient comme complément d'appui aux traitements biologiques de lutte contre le **Varroa jacobsoni** comme, par exemple, les stratégies alternatives à base d'acides organiques, formique (*FAM Liebefeld*) (18), lactique, oxalique, aux huiles essentielles (huiles éthérées) *Apilife- VAR,* ou bien à l'antiséptique phénolique Thymol (p-cymol), mais aussi l'huile d'hysope de type eucalyptol, pour autant que son action sur le varroa soit physique et pas chimique (1).

Par ailleurs, selon des études sur le varroa, l'huile essentielle aurait le pouvoir de rompre le mécanisme reproductif du varroa, car le varroa femelle convertit le sang des larves et des pupes d'abeille en nourriture pour chaque acarien en développement et ceci constituerait son Talon d'Achille (12) car l'huile essentielle détruit l'enzyme utilisé par l'acarien pour trasformer le sang des larves/pupes en nourriture pour les varroas en développement. Bien que les huiles essentielles soient, en partie, aussi toxiques pour les abeilles, elles risquent de devélopper, à leur tour, une résistance parasitaire.

Le procédé de l'invention souligne la propriété des macro/micro-éléments essentiels (Na,K, Ca, MG, Mn, Zn, Fe, Co, Ni, Mo, Se, W), appelés aussi *métallo-enzymes.* Ils jouent un rôle très important dans les processus biocathalytiques et physiologiques dans les mécanismes des enzymes comme le phosphore, par exemple, puisqu' il est impliqué dans le processus d'hydrolyse des molécules de l'enzyme de la glucose, mais aussi lors de la biosynthèse des protéines en matières grasse, ou lors de la synthèse des sucres excédentaires en lipides pour être stockés dans l'hémolymphe comme matières grasses.
Chez les insectes, les micro-éléments interviennent aussi dans le processus des enzymes de désintoxication en présence des molécules des pesticides.

D'après les études menés sur la dynamique de la population de l'acarien, le varroa se nourrit de l'hémolymphe des larves/pupes des abeilles juste avant qu'il ait pondu ses oeufs, ce qu'explique la présence de graisses et d'huiles chez l'acarien.

Attirés par des constituents secrétés par la glande hypopharyngal des ouvrières, les varroas s'instalent auprès des larves et des pupes (17).

Or, la rivalité entre les nouveaux-nés des acariens pour une meilleure place nourricière auprès de larves/pupes constitue la cause principale de la mortalité naturelle des varroas en développement (15), le rôle des estérase isoenzymes semble déterminant dans la transition larve/pupe (16), d'où l'importance cathalytique joué par les microélements dans la durée de l'operculation des couvains.

Autrement dit, il y aurait une relation entre le parasite Varroa et le système endocrinien (JH hormones) des abeilles. Par ailleurs, la fonction de régulation hormonal de l'abeille repose sur les changements intervenus dans la proportion de la biosynthèse de l'hormone JH (17).

Lors de sa recherche quotidienne, l'abeille récolte une grande quantité de nectar, de pollen et d'autres trouvailles d'origine florale. Les pollens sont des aliments azotés indispensables à la croissance des larves, ils contiennent des gamètes végétaux, enzymes et coenzymes (plus de 5'000). Leurs teneur dépend des plantes visitées par les abeilles ainsi que du type de sol sur lequel elles poussent, d'où les carences et la déficience des sols que la présente invention a pour but de remédier. En outre, le pollen est une source de :
- aminoacides
- protéines
- acides gras
- vitamines
- minéraux
- stérols
- carbohydrates
- hormones

Tandis que les fonctions des métaux proposés par l'invention pour les enzymes sont les suivantes :
- agent électron-transfer
- porteur d'oxygène
- messagers infra-cellulaires
- composants structurels
- acides Lewis
- nucléophiles

Le présent procédé a pour but d'atténuer l'impact chimique résiduel dans la ruche et de réduire le danger de créer des souches potentielles des Varroa résistants aux produits acaricides comme le fluvalinate/flumetrin (2), en même temps qu'améliorer la stratégie de lutte biologique contre le Varroa afin de pouvoir continuer la comercialisation du miel sans affecter son image, tel que produit "naturel" et "pur" (3).

De nos jours il ne pas possible concevoir l'apiculture sans un traitement anti-varroa, ce qui nous amène à parler de l'apiculture de "l'après varroa". C'est pourquoi, la présente invention concerne un procédé préventif 100% narturel visant à contribuer à la reconstitution des populations d'abeilles domestiques frapées par cet acarien asiatique.

Comme suite de l'évolution des techniques agricoles, après la Première et la Deuxième Révolution Agricole (mais pas la dernière), pour faire la place aux grandes machines agricoles et à l'acroissement de la productivité du sol, entraînant les carences et les déficiences des sols on a détruit une grande partie de la flore silvestre, le paysage de nos vallées a changé, le miel des oléagineux est omniprésent.

Tel type d'apiculture du futur,basée sur un élevage sélectif pour développer le pouvoir immunitaire de l'abeille, un gène gardé quelque part chez les reines (23). Une apiculture plus "naturelle", très diversifiée, partenaire des agriculteurs, des horticulteurs, des producteurs maraîchers, afin de pouvoir se donner les moyens de faire face aux coûts indirects engendrés par le Varroa. Aidant de cette manière les secteurs maraîchers, pomicole, horticole et surtout les apiculteurs à établir des techniques durables, de bonnes pratiques d'hygiène, en passant par l'ultrafiltration du miel, le respect du standard des apellations, ainsi que les méthodes d'analyse chimiques.

Or, pour ainsi dire, les abeilles sont cinquante fois plus précieuses pour la pollinisation qu'elles ne le sont en tant que productrices de miel, le procédé selon l'invention passe inexorablement par une prise de conscience des agriculteurs afin que les sols des plantations intensives soivent convénablements reminéralisés à l'aide des **diatomées d'eau douce**, proposées par le procédé de l'invention intervient également lors de la transplantation des arbres fruitiers au niveau des racines. Les fruits des arbres bien pollinisés perdront moins de poids et restent plus fermes lors de leur entreposage. Il faut signaler aussi que, comme suite de ce fléau, la productivité des abeilles nettoyeuses est parfoi réduite et elles deviennent moins efficaces(4). Actuellement, la technologie n'a pas les moyens pour remplacer le travail pollinisateur de l'abeille.

À moins que les apiculteurs n'interviennent et ne traitent les ruches, l'infestation entraîne presque toujours la mort des colonies infectées, que ce soit *l'Apis mellifera ou l'Apis cerana (Indica)* (5) dû, en partie, à l'infection virale transmise par l'acarien à l'hémolymphe des abeilles. L'abeille adulte doit supporter une perte de sang ainsi qu'une adjonction virale, le virus de la paralysie aiguë (APV). Selon un étude de l'Agricultural Research Service of Baltimore (Hung Akey, 1998-05-04) sur les virus associés au vecteur varroa, il y aurait trois variantes du Virus de Kashmir (KBT) déterminés par la scission des sites de deux enzymes limitatives.

Puisque le 70% des enzymes contiennent des métaux et, même s'il n'est pas encore clair pour les scientifics si l'action exercé par le varroa sur les abeilles est physique ou chimique, le procédé selon l'invention présente l'action catalythique exercé par le pouvoir fertilisant des diatomées, micro-algues d'eau douce fossilisées, ce qui présente un profil particulièrement avantageux sur le plasma des arbres fruitiers et des végétaux en général, puisque la qualité du miel en métaux et en substances antioxydentes et métalloprotéines (21) dépend de la qualité des nectars (6).

Il faut en tout 16 éléments pour cultiver de façon saine, 13 d'entre eux sont tirés du sol, 6 sont appelés macro-éléments, tandis que 7 éléments sont appelés micro-éléments.

Dans le cadre de la botanique apicole, en tenant compte de l'action des principaux *cations* sur le plasma des végétaux (Na, K, Ca, Mg), l'objectif du procédé de l'invention est d'atteindre, grâce à une action stimulante et sélective, le rééquilibrage naturel en micro-éléments catalyseurs présents dans les différents nectars et aussi dans le pollen :
**a)** dans le nectar sécrété par les nectaires des fleurs.
**b)** dans le miellat, sous forme de goutelettes sucrées des feuilles et des bourgeons des arbres, synthétisé ultérieurement par les abeilles mellifiques pour la fabrication du miel.
**c)** dans les substances riches en oligo-éléments qui sortent des pores nectarifères des plantes.
**d)** dans le pollen produit par les étamines des entomophiles.
**e)** dans la propolis (7), antiseptique puissant et efficace, élaboré par les abeilles à partir des résines récoltés sur les bourgeons des arbres et arbustes, notamment les flavanoïdes sécretés par les peupliers, etc.

Comme suite de sa tolérance acaricide, *l'Apis mellifera* n'a pas une défense naturelle contre l'acarien, la réponse immunitaire des abeilles contre les parasites (8 et 13) est bénéficiée par cet apport supplémentaire en éléments catalytiques (Mn, Cu, Zn) extra/intra-cellulaire (Cu-Zn SOD), à travers les nectars, car cela augmente le pouvoir des sécrétions odorantes des abeilles (effluves) et du pouvoir antiseptique de la propolis (apidaecins/abaecin) facilité par le processus biocathalitiques des enzymes et développer ainsi, mais aussi grâce à la pratique du remérage apicole (19), la résistance des abeilles aux maladies. Or, le Varroa ne resiste pas plus que 4 jours éloigné des abeilles (9), les varroas qui tombent de la colonie sont éliminés faute de pouvoir remonter grâce à l'utilisation des *plateaux anti-varroas* (10) conçus à tel effet.

Dû à l'apparente uniformité de la population des varroas et au fait que les abeilles dérivent d'une ruche à l'autre, à la logique de ses conditions de vie dans la ruche et, aussi, au fait que le varroa se propage à des courtes distances car il ne se reproduit pas sur d'autres insectes (14), bien qu'il commence à se propager sur le populations d'autres animaux à travers les plantes pollinisées par les abeilles infestées (20), le procédé selon l'invention constitue un moyen complémentaire non toxique pour aider à prévenir le fléau sans aucune incidence sur les insects bénéfiques.

Etant donné que la surveillance régulière de la population de Varroa est une mesure essentielle, car elle permet de décéler à temps une éventuelle augmentation de la population de parasites et, partant, d'appliquer les mesures de lutte qui s'imposent.

Le couvain des mâles non operculé, habitat où le Varroa femelle pond des oeufs (11), enrichi en micro-éléments grâce à l'apport en pollen riche en éléments essentiels, fortifie le systhème immunitaire des abeilles et des larves nourries essentiellement de pollen pour mieux les protéger des parasites évitant, ainsi, de donner plus tard des faux-bourdons parasités.

Le composé selon l'invention n'est pas organique et ne contient pas d'appâts, il est fabriqué à partir des diatomées, algues fossilisées réduites en poudre. Il est très indiqué pour l'assainissement des arbres fruitiers lors de la transplantation au niveau des racines.

L'emploi du produit proposé par l'invention doit être bien dosé à raison de 0.8 à 1% dans l'eau, il a la propriété d'agir de manière physique et pas chimique. Pour les plants il n'y a de risque de surdose. En fait, le composé sert de fertilisant pour les plants traités.

En conséquence, l'invention fournit un procédé 100% naturel, efficace et non toxique à base des diatomées d'origine végétale comprenant 86.14% de silice amorphe conjointement avec plusieurs oligo-éléments catalyseurs tous compatibles et pas nuisibles à leur formulation.

Selon une particularité supplémentaire de l'invention, les matières minérales ou cendres du miel ont une teneur inférieure à 1%. On y trouve, dans l'ordre d'importance, du potassium, du calcium, du sodium, du magnésium, du cuivre, du manganèse, du chlore, du phosphore, du soufre et du silicium ainsi que plus de trente oligo-éléments. Leurs teneur dépend des plantes visitées par les abeilles ainsi que du type de sol, reminéralisés ou non reminéralisé sur lequel elles poussent, d'où les carences et la déficience des sols que la présente invention a pour but de remédier. Ainsi, la présente invention fournit un procécé non toxique à base de micro-algues d'eau douce fossilisées à effet fertilisant comprenant 34 micro-éléments pour englober la prophylaxie des nectars et des pollens apportés par l'abeille dans la ruche.

### Références :

1). FAM Lieberfeld, Berne/Katie Shaw, Biological Control of Varroa jakobsoni.
2). SANDOZ S.A., Bâle. (IBRA, Cardiff, UK, 1996).
3). c.f.r. MILANI, 1996.
4). N. Bradbear, FAO.
5). ACIA, Ottawa, 1998
6). University of Illinois, 07/08/98
7). Eric Kock Larsen, La Propolis.
8). Denholm C.H., Viruses and varroa / The induction of virus replication in honey bées.
9). Life cycle of varroa /FAIRS, Florida agricultural Information Retriaval System.
10). J.-P. Le Pabic, Rueil-Malmaison France.
11). University of Florida, Dpt of Entomology and Nematology.
12). J.W. Amrine, Terry A. Stasny, West Virginia University.
13). R.Paxton, IBRA, London, UK.
14). University of Florida, Dept. of Entomology and Nematology.
15). Central Science Laboratory, Warwickshire, CV37 9SJ, UK.
16). Universidade de Sao Paulo, Dép. de Biologia, V.L.C. Figueiredo, Brazil.
17). CNRS, Naturwissenshaft, 462-465 (Y. Leconte, C.A. Strambi).
18). FAM, Liebefeld, Berne.
19). Frère Adam, O.S.B., Abbaye St. Mary, Buckfast, Sud Devon, Angleterre.
20). IBRA, Cardiff, CF1, 3DY.
21). ICBIC 99, Center for Metals in Biocatalysis, University of Minesota.
22). Metal/microbe interactions, Metals in Biology (MBM), King's College, London.
23). Ashleigh Milner, British Isles Bee Breeder magazine, BIBBA, UK.
24). Varoa jacobsoni in brood, Boot,W.J., Tan, N.Q. Entomological Research.
25). Triwaks Bee Research Center-Israel.

### Exemple 1

La **cuticule** de l'abeille est un type de cuticule complexe rendue fragile comme suite des carences alimentaires pendant son développement, dont le procédé de l'invention a pour but de remédier:
- La cuticule préserve l'intégrité de l'organisme de l'abeille, dont elle détermine la forme et la couleur.
   Elle assure une protection contre les agressions physiques et chimiques du milieu extérieur et contre la déshydratation tout en permétant des échanges grâce à sa perméabilité polarisée et sélective.

- Elle assure la réception et la diffusion des informations indispensables à la pérennité de l'abeille, à son adaptation au milieu et à ses fluctuations. Elle est asociée au système sensoriel (oeil, audition) et à l'émission de messages auditifs, olfactifs, etc.
- Elle participe, en qualité d'exosquelette, et en tant que point d'encrage du système musculaire, à l'ensamble des processus moteurs.
- Elle est impliquée dans l'ensamble des fonctions de nutrition. Le système trachéen peut être considéré comme une invagination tubulaire complexe du tégument. La cuticule périphérique sert de réserve de nourriture lors des mues ou de jeûne, C'est là où le Varroa vient s'agripper pour se nourrir.
- Elle intervient dans les foctions de reproduction.

* Du côté de l'acaride, les chélicères des femelles de Varroa sont en forme de lame et servent a perforer la cuticule de l'abeille. Ce travail représente une grande dépense d'énergie du côté du Varroa puisqu'il lui faut travailler 2 heures de temps pour y réussir.
   **(Voir schéma N°1)**

### Exemple 2

La découverte de Karl Von Frisch, aujourd'hui controversée, à demontré l'importance que l'abeille attribue à la qualité de la source de pollen retrouvé, et que l'abeille éclaireuse exprime par des frémissements plus ou moins intenses lors de la danse,

Cependant, grâce à nos travaux d'observation auprès du Rucher de l'apiculteur Silvio Saez (San Juan, Argentine), nous sommes en mesure d'expliquer le sence des boucles exécutées par l'abeille éclaireuse lors de sa danse:
* Pour **la danse en huit**, les deux demis-cercles représentent le disque solaire vu par l'abeille à l'aller vers la source florale, puis au retour vers la ruche. A l'aller elle le voit à sa droite puis, au retour, elle le voit à sa gauche. Voir schéma suivent:
* Pour **la danse en rond**, la distance entre la ruche et la source de nectar étant minime (dans les 5 mètres), à la différence de la dance en huit, l'abeille éclaireuse représente les deux disques solaires du même côté, en les intégrant l'un dans l'autre:
   **(Voir schéma N°2)**

### Exemple N°3

**Composition chimique des Diatomées d'eau douce :**
- Silice amorphe: 86.14%
- Aluminium: 3.13%
- Antimoine: 0.1ppm
- Argent: 0.5ppm
- Arsénique: 4.5ppm
- Baryum: 1.96ppm
- Béryllium: 1ppm
- Bismuth: 0.1ppm
- Calcium: 2%
- Chrome: 40ppm
- Cobalt: 3ppm
- Cuivre: 6ppm
- Étain: 2ppm
- Fer: 0.75%
- Lanthane: 13ppm
- Magnésium: 0.52%
- Manganèse: 0.15%
- Molybdène: 2pp
- Nickel: 4ppm
- Niobium: 6ppm
- Phosphore: 0.018%
- Potassium: 0.72%
- Scandium: 3ppm
- Sodium: 1.92%
- Strontium: 362ppm
- Tellure: 0.1ppm
- Thallium: 6ppm
- Thorium: 4ppm
- Titane: 0.11%
- Vanadium: 65ppm
- Yttrium: 7ppm
- Zinc: 34ppm
- Zirconium: 22ppm

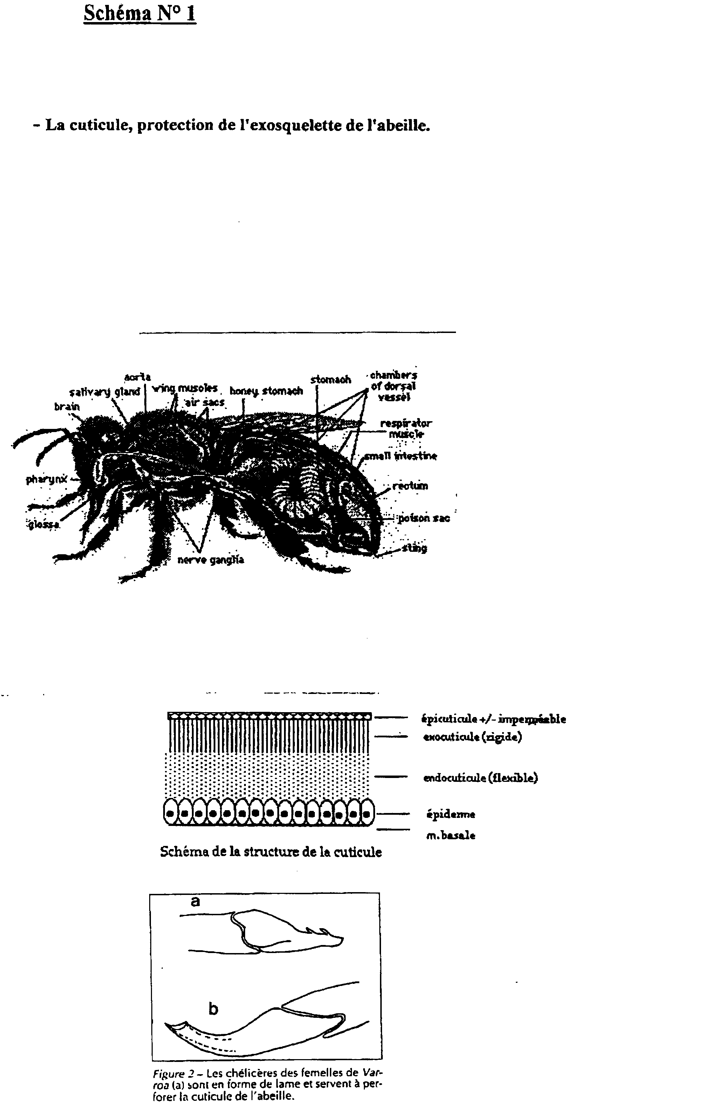

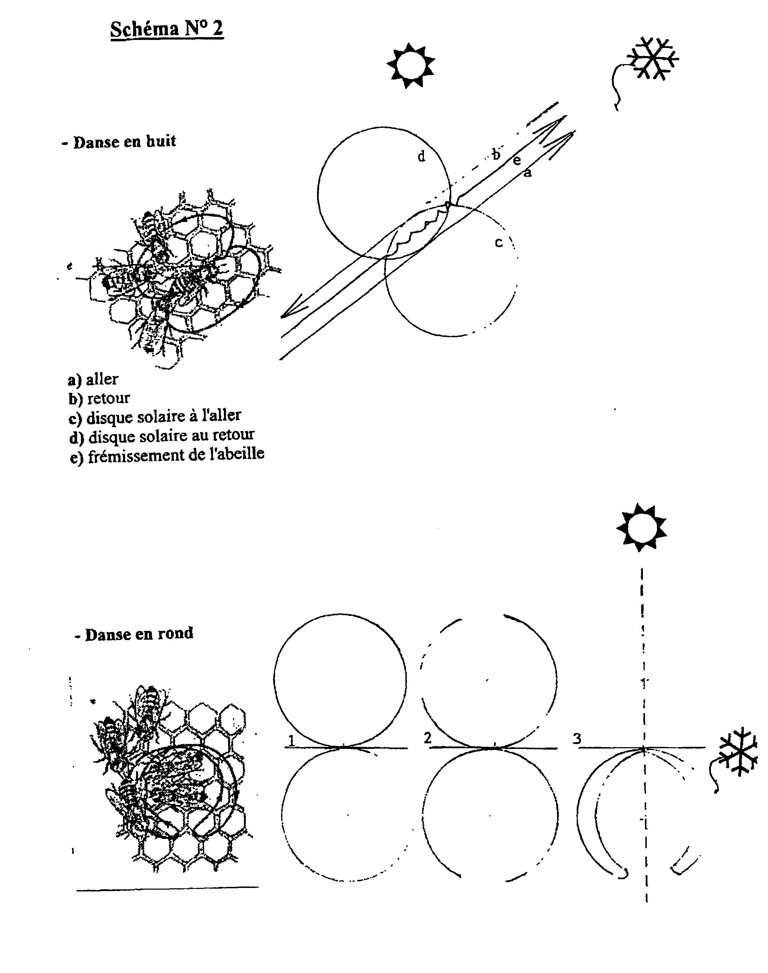

## Revendications

1. Procédé visant à préserver les populations des abeilles dans la lutte antiparasitaire contre le Varroa, Grâce au procédé de l'invention, on améliore la croissance des larves tout en augmentant la réaction immunitaire de l'abeille contre les parasites par le renforcement de la cuticule toraxique et abdominale. On atteint, également, le rééquilibrage de la teneur du miel et du pollen d'abeille en oligo-éléments.

2. Procédé selon la revendication 1, caractérisé par la reminéralisation des sols, et la prophylaxie des arbres fruitiers et des végétaux en général afin d'améliorer la qualité du nectar et du pollen des fleurs visant un équilibre dans la teneur en micro-éléments essentiels pour le systhème antiseptique des plantes et celui des abeilles et de ses larves dans la lutte antiparasitaire dans la ruche.

3. Procédé selon la revendication 1, caractérisé par l'emploi à usage antiparasitaire et comme fertilisant des diatomées, micro-algues d'eau douce fossilisées 100% naturel, riches en silice amorphe.

4. Procédé selon l'une des revendications précédentes, caractérisé par l'emploi d'un produit non toxique 100% naturel d'origine végétale, proposant des traitements sélectifs à moindre dose et à moindre impact sur l'environnement.

5. Le temps que l'abeille butineuse passe à l'intérieur de la fleur à se frotter au pollen, fait partie de son travaille journalier d'hygiène cuticulaire. C'est la raison pour laquelle ce sont précisément le abeilles les plus jeunes qui se chargent de la collecte de pollen.

6. Lors de la danse en huit, comme pour la danse en rond, l'abeille éclaireuse dessine le disque solaire.
